# FASCICULE DE BREVET EUROPEEN

(11) **EP 0 500 430 B1**
(45) Date de publication et mention de la délivrance du brevet: **30.11.1994**
(21) Numéro de dépôt: 92400399.9
(22) Date de dépôt: 14.02.1992
(51) Int. Cl.: B60K 11/08

(54) **Dispositif à volets pivotants pour la régulation du débit d'air traversant un échangeur de chaleur**
Drehklappeneinrichtung zur Regelung des Luftstromes durch einen Wärmetauscher
Pivotable flap device for regulating the air flow through a heat exchanger

(30) Priorité: 21.02.1991 FR 9102101
(43) Date de publication de la demande: 26.08.1992
(73) Titulaire: VALEO THERMIQUE MOTEUR, 78320 Le Mesnil Saint-Denis (FR)
(72) Inventeur: Collette, Thierry, F-78000 Versailles (FR)
(74) Mandataire: Gamonal, Didier

(56) Documents cités:
- EP-A- 0 327 740
- DE-A- 3 836 374
- FR-A- 2 404 557
- US-A- 1 711 215

## Description

L'invention concerne un dispositif à volets pivotants pour la régulation du débit d'air traversant un échangeur de chaleur, en particulier un radiateur de refroidissement d'un moteur de véhicule automobile.

Il est connu de disposer, sur le trajet d'écoulement de l'air traversant un tel radiateur de refroidissement, une multiplicité de volets montés à pivotement autour d'axes parallèles et actionnés par des moyens de commande gui comprennent un organe mobile en translation portant une multiplicité de voies de came de formes choisies, dont chacune est propre à recevoir une came solidaire en rotation d'un volet.

Un dispositif de régulation à volets pivotants de ce type est connu notamment d'après le document FR-A-2 191 493.

Il est connu également par le document DE-A-3 836 374, qui correspond au préambule de la revendication indépendante, d'utiliser des moyens de commande qui comprennent un organe mobile portant une multiplicité de voies de came de formes choisies dont chacune est propre à recevoir une came solidaire en rotation d'un volet et dont les cames sont reliées à l'organe mobile par des ressorts.

Il en résulte certains inconvénients. Par exemple, lorsque le véhicule roule à grande vitesse, les volets peuvent avoir des difficultés à s'ouvrir ou à se fermer compte tenu d'une part de la pression de l'air qui s'exerce simultanément sur tous les volets et d'autre part de la force exercée par les ressorts sur les cames.

Cet inconvénient se rencontre principalement lorsque tous les volets sont fermés, car il existe alors une différence de pression élevée entre les régions situées respectivement en amont et en aval des volets, par rapport à la direction d'écoulement du débit d'air.

Pour vaincre cette différence de pression, il est nécessaire de prévoir des moyens de commande suffisamment puissants donc encombrants et coûteux en énergie.

L'invention a notamment pour but d'éviter les inconvénients précités.

Elle propose en effet un dispositif de régulation, du type défini en introduction, dans lequel les voies de came ont la plupart la forme d'un L comportant une branche sensiblement parallèle à la direction de translation de l'organe mobile et une branche sensiblement perpendiculaire à la direction de translation de l'organe mobile, dans lequel les branches sensiblement parallèles à la direction de translation n'ont pas toutes la même longueur, dans lequel l'organe est mobile dans une seule direction en étant guidé par des moyens de guidage dans lequel les cames sont librement disposées sur l'organe mobile.

On peut ainsi commander le pivotement de chacun des volets suivant une loi bien définie et, en particulier, réaliser une ouverture progressive et une fermeture progressive des volets.

On peut faire pivoter les volets les uns à la suite des autres, et non pas simultanément comme dans les dispositifs antérieurs. Il n'est alors plus nécessaire de prévoir des moyens de commande puissants, comme c'était le cas avec les dispositifs de la technique antérieure.

De préférence, l'organe mobile est déplaçable dans une direction orthogonale à chacun des axes de pivotement des volets, et à une distance égale de chacun d'eux.

Dans le cas où les axes de pivotement des volets sont dans un même plan, l'organe mobile est alors déplaçable en translation dans une direction parallèle au plan précité.

Selon une autre caractéristique de l'invention, le dispositif comprend des moyens de guidage en translation de l'organe mobile.

Avantageusement, cet organe mobile est réalisé sous la forme d'une plaque oblongue et les moyens de guidage comprennent alors une fente longitudinale ménagée au travers de la plaque et traversée par les axes de pivotement des volets.

Dans le cas où l'organe mobile est une plaque oblongue, les voies de cames sont avantageusement constituées par des fentes ménagées au travers de la plaque.

De préférence, les cames sont constituées chacune d'un tourillon solidaire d'un bras de manivelle calé sur l'axe de pivotement d'un volet.

Les voies de cames et les rayons des bras de manivelle sont choisis de sorte que les volets puissent pivoter chacun, sous l'action de l'organe mobile, suivant une loi définie.

En particulier, dans le cas où les fentes ont la forme d'un L, les deux branches du L des différentes fentes n'ont pas nécessairement la même longueur, l'une des branches du L d'une fente pouvant avoir une valeur nulle.

Dans la description qui suit, donnée seulement à titre d'exemple, on se réfère au dessin annexé, sur lequel :
- la figure 1 est une vue éclatée d'un dispositif de régulation selon l'invention, placé en amont d'un radiateur de refroidissement ;
- la figure 2 est une vue de côté du dispositif de la figure 1 montrant la position des volets et de leurs moyens de commande, dans une position de fermeture ;
- la figure 3 est une vue analogue à celle de la figure 2 dans une position d'ouverture ; et
- la figure 4 est une vue partielle de côté d'un volet et de ses moyens de commande.

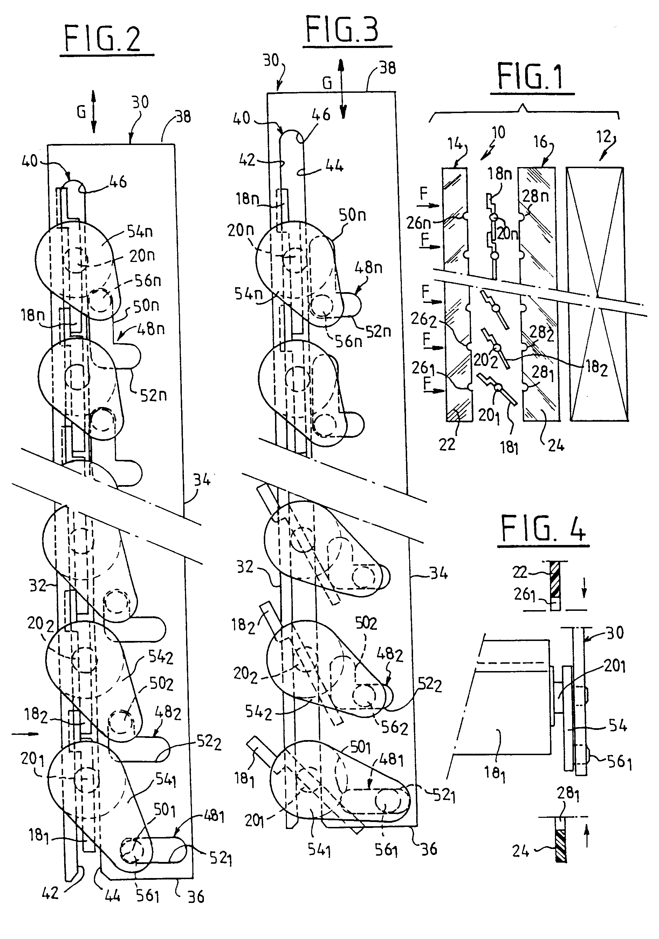

On se réfère tout d'abord à la figure 1 qui montre un dispositif de régulation 10 selon l'invention placé en amont d'un radiateur de refroidissement 12, par exemple d'un véhicule automobile. Le dispositif 10 est traversé par un flux d'air dans la direction représentée par les flèches F et ce flux d'air traverse ensuite le radiateur 12 pour refroidir, de façon en soi connue, un fluide caloporteur, par exemple le liquide de refroidissement du moteur du véhicule.

Le dispositif 10 comprend un bâti formé de deux cadres rectangulaires 14 et 16 servant de support à une multiplicité de volets 18₁, 18₂, ..., 18ₙ, montés à pivotement autour d'axes respectifs 20₁, 20₂, ..., 20ₙ. Les axes de pivotement 20₁ à 20ₙ sont parallèles entre eux et, dans l'exemple, disposés à l'horizontale. Les deux cadres rectangulaires 14 et 16 comportent notamment deux montants verticaux 22 et 24 (visibles sur la figure 1) et deux autres montants verticaux non visibles sur cette figure. Le montant 22 comporte des encoches 26₁, 26₂, ..., 26ₙ, de forme semi-circulaire d'axes parallèles et, de façon correspondante, le montant 24 comporte des encoches 28₁, 28₂, ..., 28ₙ, également de forme circulaire et d'axes parallèles. Toutes ces encoches sont équidistantes les unes des autres. Lorsque les cadres rectangulaires 14 et 16 sont rapprochés l'un de l'autre, les axes 20₁, 20₂, ..., 20ₙ des volets 18₁, 18₂, ..., 18ₙ sont reçus respectivement dans les logements cylindriques ainsi formés par la réunion des encoches.

Bien entendu, et sans sortir du cadre de l'invention, il est possible d'assurer le montage des axes, des volets par d'autres moyens connus.

Conformément à l'invention, les volets 18₁ à 18ₙ sont commandés par des moyens qui leur permettent de pivoter selon une loi définie. On remarque d'ailleurs, sur la figure 1, que le volet 18₁ est ouvert, le volet 18₂ un peu moins ouverte que le volet 18₁ et ainsi de suite et que, finalement, le volet 18ₙ est complètement fermé.

On se réfère maintenant à la figure 2 dans laquelle les volets 18₁ à 18ₙ sont tous en position fermée.

Dans la forme de réalisation représentée, les axes de pivotement 20₁ à 20ₙ des volets 18₁ à 18ₙ sont situés dans un même plan et le pivotement des volets est assuré par l'intermédiaire d'un organe mobile 30 déplaçable en translation dans une direction G qui est orthogonale à chacun des axes 20₁ à 20ₙ et parallèle au plan qui contient ces axes.

L'organe mobile 30 a la forme d'une plaque oblongue généralement rectangulaire limitée par deux grands côtés opposés 32 et 34 et deux petits côtés opposés 36 et 38. La plaque de l'organe mobile comporte une fente longitudinale 40 limitée par deux bords 42 et 44 parallèles entre eux et parallèles aux bords 32 et 34 de la plaque. Les bords 42 et 44 ménagent entre eux un intervalle de largeur légèrement supérieure au diamètre des axes de pivotement des volets. Les bords 42 et 44 sont, du côté du bord 38, reliés entre eux par un bord 46 en forme d'arc de cercle. A leur autre extrémité, les bords 42 et 44 débouchent sur le bord 36 de la plaque. La fente longitudinale 40 est traversée par les axes de pivotement des volets, ce qui permet d'assurer le guidage en translation de l'organe mobile 30 qui peut ainsi se déplacer dans la direction de la flèche G, dans un sens ou dans l'autre. Ce déplacement en translation peut être assuré par tout moyen approprié, par exemple par un câble, une capsule de cire sensible à la chaleur, etc.

L'organe mobile 30 porte une multiplicité de voies de came 48₁, 48₂, ..., 48ₙ, la plupart constituée par une fente en L de forme spécifique, ménagée au travers de la plaque. Chacune des voies de came comporte une branche 50₁, 50₂, ..., 50ₙ, sensiblement parallèles à la direction de translation G, la longueur de la branche 50₁ étant dans le cas des figures d'une valeur nulle, et une branche 52₁, 52₂, ..., 52ₙ, sensiblement perpendiculaires à la direction G. La longueur des branches est adaptée pour chacune des fentes.

Ainsi, la longueur des branches 50₁, 50₂, ..., 50ₙ va en croissant depuis la voie de came 48₁ jusqu'à la voie de came 48ₙ. Par contre, la longueur des branches 52₁, 52₂, ..., 52ₙ va en décroissant depuis la voie de came 48₁ jusqu'à la voie de came 48ₙ. Pour la suite de la description, il est considéré que la branche 50₁, est située à l'extrémité de la branche 52₁ et que sa longueur équivaut à la largeur de la branche 52₁.

Comme on le verra plus loin, les branches 50₂ à 50ₙ forment une voie à course morte, tandis que les branches 52₁ à 52ₙ forment des voies de commande agissant sur le pivotement des volets.

Chacun des axes 20₁ à 20ₙ est muni, à l'une de ses extrémités, d'un bras de manivelle 54₁ à 54ₙ (figures 2, 3 et 4), chaque bras de manivelle étant muni d'un tourillon 56₁ à 56ₙ. Ces tourillons sont propres à s'engager respectivement dans les voies de cames 48₁ à 48ₙ portées par l'organe mobile 30. Comme cela ressort des figures 2 et 3, le rayon du bras de manivelle (compris entre l'axe de pivotement et le tourillon) va en décroissant depuis le bras de manivelle 54₁ jusqu'au bras de manivelle 54ₙ.

Dans la position de fermeture des volets (figure 2), les tourillons 56₁ à 56ₙ sont chacun en fin de course respectivement dans les branches 50₁ à 50ₙ des voies de cames. Les volets sont en position de fermeture et se chevauchent les uns les autres grâce à leur forme particulière. Si l'on commence à déplacer l'organe mobile dans le sens de la flèche G, sur le haut de la figure, les tourillons 56₁ à 56ₙ sont guidés respectivement dans les branches 50₁ à 50ₙ. Tant que les tourillons se déplacent dans les branches 50₁ à 50ₙ qui constituent des voies à course morte, les volets ne pivotent pas. Comme les branches 50₁ à 50ₙ ont des longueurs différentes, le volet 18₁ commence a pivoter le premier, d'autant que la longueur de la branche 50₁ est négligeable, voire nulle. Ensuite, les autres volets 50₂, ..., 50ₙ pivotent les uns après les autres, à partir du moment où le tourillon correspondant s'engage dans l'autre branche 52₁ à 52ₙ. Par conséquent, les branches 50₂ à 50ₙ constituent des branches à course morte, tandis que les branches 52₁ à 52ₙ constituent des branches de commande agissant positivement sur le pivotement des volets.

En choisissant de manière appropriée les formes respectives des voies de cames 48₁ à 48ₙ, ainsi que les longueurs des bras de manivelle 54₁ à 54ₙ, on peut définir une loi de pivotement particulière en fonction de l'utilisation souhaitée.

Dans la position de la figure 3, pratiquement tous les volets ont pivoté d'un certain angle, à chaque fois différent, à l'exception toutefois des derniers volets.

Lorsque l'organe mobile est en fin de déplacement, tous les volets ont pivoté d'un certain angle qui n'est pas forcément le même pour chacun des volets.

Bien entendu, il est possible de choisir les formes des voies de cames et les rayons des bras de manivelle pour définir une autre loi de pivotement.

En outre, l'invention n'est pas limitée à la forme de réalisation décrite précédemment et s'étend à d'autres variantes toutes comprises dans les revendications suivantes.

Par exemple, il est possible de réaliser, suivant les mêmes principes, un dispositif de régulation dans lequel les axes des volets, tout en étant parallèles entre eux, ne sont pas dans un même plan.

## Revendications

1. Dispositif de régulation du débit d'air au travers d'un échangeur de chaleur, comportant une multiplicité de volets (18ₗ à 18ₙ) montés pivotants autour d'axes parallèles (20ₗ à 20ₙ)' et actionnés par des moyens de commande qui comprennent un organe (30) mobile en translation portant une multiplicité de voies de came (48ₗ à 48ₙ) de formes choisies, dont chacune est propre à recevoir une came (56ₗ à 56ₙ) solidaire en rotation d'un volet (18ₗ à 18ₙ), caractérisé en ce que les voies de came (48ₗ à 48ₙ) ont la plupart la forme d'un L comportant une branche (50ₗ à 50ₙ) sensiblement parallèle à la direction de translation de l'organe mobile (30) et une branche (52ₗ à 52ₙ) sensiblement perpendiculaire à la direction de translation de l'organe mobile (30), en ce que les branches (50ₗ à 50ₙ) sensiblement parallèles à la direction de translation n'ont pas toutes la même longueur, en ce que l'organe (30) est mobile dans une seule direction en étant guidé par des moyens de guidage (40) et en ce que les cames (56ₗ à 56ₙ) sont librement disposées sur l'organe mobile (30).

2. Dispositif selon la revendication 1, caractérisé en ce que l'organe mobile (30) est déplaçable dans une direction orthogonale à chacun des axes (20ₗ à 20ₙ) et restant à une distance égale de chacun d'eux.

3. Dispositif selon la revendication 2, caractérisé en ce que les axes de pivotement (20ₗ à 20ₙ) des volets sont dans un même plan et en ce que l'organe mobile (30) est déplaçable en translation dans une direction parallèle au plan précité.

4. Dispositif selon la revendication 1, caractérisé en ce que l'organe mobile (30) est une plaque oblongue et en ce que les moyens de guidage comprennent une fente longitudinale (40) ménagée au travers de la plaque et traversée par les axes de pivotement (20ₗ à 20ₙ) des volets (18ₗ à 18ₙ).

5. Dispositif selon l'une des revendications 1 à 4, caractérisé en ce que l'organe mobile (30) est une plaque oblongue, en ce que les voies de came (48ₗ à 48ₙ) sont formées par des fentes ménagées au travers de la plaque, et en ce que les cames sont constituées chacune d'un tourillon (56ₗ à 56ₙ) solidaire d'un bras de manivelle (54ₗ à 54ₙ) calé sur l'axe de pivotement d'un volet.

6. Dispositif selon la revendication 5, caractérisé en ce que les voies de came (48l à 48n) et les rayons des bras de manivelle (54ₗ à 54ₙ) sont choisis pour que les volets (18ₗ à 18ₙ) pivotent, sous l'action de l'organe mobile (30) suivant une loi définie.

7. Dispositif selon l'une des revendications 1 à 6, caractérisé en ce que les deux branches du L des voies de cames (48ₗ à 48ₙ) n'ont pas toutes la même longueur et en ce que l'une des branches (50ₗ) d'une voie de came (48ₗ) peut avoir une valeur nulle.

## Claims

1. A device for regulating the flow of air through a heat exchanger, comprising a multiplicity of flap valves (18₁ to 18ₙ) mounted for pivoting movement about parallel axes (20₁ to 20ₙ), and actuated by control means which include a member (30) movable in translation and carrying a multiplicity of cam tracks (48₁ to 48ₙ) of selected shapes, each of which is adapted to receive a cam (56₁ to 56ₙ) secured in rotation to a flap valve (18₁ to 18ₙ), characterised in that the cam tracks (48₁ to 48ₙ) are mainly L-shaped, comprising a branch (50₁ to 50ₙ) substantially parallel to the direction of translation of the movable member (30), and a branch (52₁ to 52ₙ) substantially at right angles to the direction of translation of the movable member (30), in that the branches (50₁ to 50ₙ) substantially parallel to the direction of translation are not all of the same length, in that the member (30) is movable in only one direction, being guided by guide means (40), and in that the cams (56₁ to 56ₙ) are freely disposed on the movable member (30).

2. A device according to Claim 1, characterised in that the movable member (30) is displaceable in a direction at right angles to each of the axes (20₁ to 20ₙ), remaining at an equal distance from each of them.

3. A device according to Claim 2, characterised in that the pivot axes (20₁ to 20ₙ) of the flap valves are in a common plane, and in that the movable member (30) is displaceable in translation in a direction parallel to the said plane.

4. A device according to Claim 1, characterised in that the movable member (30) is an oblong plate, and in that the guide means comprise a longitudinal slot (40), which is formed through the plate and through which the pivot axes (20₁ to 20ₙ) of the flap valves (18₁ to 18ₙ) pass.

5. A device according to one of claims 1 to 4, characterised in that the movable member (30) is an oblong plate, in that the cam tracks (48₁ to 48ₙ) are defined by slots formed through the plate, and in that each of the cams comprises a crank pin (56₁ to 56ₙ) which is fixed to a crank (54₁ to 54ₙ) mounted on the pivot axis of a flap valve.

6. A device according to Claim 5, characterised in that the cam tracks (48ₐ to 48ₙ) and the radii of the crank arms (54₁ to 54ₙ) are so selected that the flap valves (18₁ to 18ₙ) pivot under the action of the movable member (30) in accordance with a defined law.

7. A device according to one of Claims 1 to 6, characterised in that the two branches of the L of the cam tracks (48₁ to 48ₙ) are not all of the same length, and in that one of the branches (50₁) of a cam track (48₁) may have a zero value.

## Patentansprüche

1. Einrichtung zur Regelung des Luftstroms durch einen Wärmetauscher, bestehend aus einer Mehrzahl von Klappen (18₁ bis 18ₙ), die drehbar um parallele Achsen (20₁ bis 20₂) angebracht sind und durch Betätigungsmittel angetrieben werden, die ein geradlinig bewegliches Organ (30) mit einer Mehrzahl von Nockenbahnen (48₁ bis 48ₙ) in ausgewählten Formen umfassen, die jeweils einen Nocken (56₁ bid 56ₙ) aufnehmen können, der drehfest mit einer Klappe (18₁ bis 18ₙ) verbunden ist, **dadurch gekennzeichnet,** daß die Nockenbahnen (48₁ bis 48ₙ) zumeist die Form eines L mit einem zur Bewegungsrichtung des beweglichen Organs (30) in etwa parallelen Schenkel (50₁ bis 50ₙ) und einem zur Bewegungsrichtung des beweglichen Organs (30) in etwa senkrechten Schenkel (52₁ bis 52ₙ) aufweisen, daß die zur Bewegungsrichtung in etwa parallelen Schenkel (50₁ bis 50ₙ) nicht alle die gleiche Länge besitzen, daß das Organ (30) nur in einer Richtung beweglich ist und dabei durch Führungsmittel (40) gefuhrt wird und daß die Nocken (56₁ bis 56ₙ) auf dem beweglichen Organ (30) frei angeordnet sind.

2. Einrichtung nach Anspruch 1 , **dadurch gekennzeichnet,** daß das bewegliche Organ (30) in einer Richtung verschiebbar ist, die rechtwinklig zu jeder der Achsen (20₁ bis 20ₙ) und in einem gleichbleibenden Abstand von jeder dieser Achsen verläuft.

3. Einrichtung nach Anspruch 2 , **dadurch gekennzeichnet,** daß die Drehachsen (20₁ bis 20ₙ) der Klappen in der gleichen Ebene liegen und daß das bewegliche Organ (30) in einer Richtung geradlinig verschiebbar ist, die parallel zu der genannten Ebene verläuft.

4. Einrichtung nach Anspruch 1 , **dadurch gekennzeichnet,** daß es sich bei dem beweglichen Organ (30) um eine längliche Platte handelt und daß die Führungsmittel einen Längsschlitz (40) umfassen, der in der Platte angebracht ist und durch den die Drehachsen (20₁ bis 20ₙ) der Klappen (18₁ bis 18ₙ) hindurchgehen.

5. Einrichtung nach einem der Ansprüche 1 bis 4, **dadurch gekennzeichnet,** daß es sich bei dem beweglichen Organ (30) um eine längliche Platte handelt, daß die Nockenbahnen (48₁ bis 48ₙ) durch Schlitze gebildet werden, die in der Platte angebracht sind, und daß die Nocken jeweils aus einem Zapfen (56₁ bis 56ₙ) bestehen, der fest mit einem an der Drehachse einer Klappe verkeilten Kurbelarm (54₁ bis 54ₙ) verbunden ist.

6. Einrichtung nach Anspruch 5 , **dadurch gekennzeichnet,** daß die Nockenbahnen (48₁ bis 48ₙ) und die Radien der Kurbelarme (54₁ bis 54ₙ) so ausgewählt werden, daß sich die Klappen (18₁ bis 18ₙ) unter der Einwirkung des beweglichen Organgs (30) entsprechend einem vorgegebenen Verlauf drehen.

7. Einrichtung nach einem der Ansprüche 1 bis 6, **dadurch gekennzeichnet,** daß die beiden Schenkel der L-Form der Nockenbahnen (48₁ bis 48ₙ) nicht alle die gleiche Länge haben und daß einer der Schenkel (50₁) einer Nockenbahn (48₁) einen Wert gleich Null haben kann.
